# FASCICULE DE BREVET EUROPEEN

(11) **EP 4 168 968 B1**
(45) Date de publication et mention de la délivrance du brevet: **06.08.2025**
(21) Numéro de dépôt: 20747015.4
(22) Date de dépôt: 22.06.2020
(51) Int. Cl.: G06Q 30/06, G06Q 20/04

(54) **SYSTÈME ET PROCÉDÉ POUR ÉCHANGER DES DONNÉES DE PAIEMENT ENTRE UNE CAISSE ENREGISTREUSE ET UN DISPOSITIF D'ACQUISITION DE PAIEMENTS ÉLECTRONIQUES**
SYSTEM UND VERFAHREN ZUM AUSTAUSCH VON ZAHLUNGSDATEN ZWISCHEN EINER REGISTRIERKASSE UND EINER VORRICHTUNG ZUR ERFASSUNG ELEKTRONISCHER ZAHLUNGEN
SYSTEM AND METHOD FOR EXCHANGING PAYMENT DATA BETWEEN A CASH REGISTER AND A DEVICE FOR ACQUIRING ELECTRONIC PAYMENTS

(43) Date de publication de la demande: 26.04.2023
(73) Titulaire: Banks and Acquirers International Holding, 75015 Paris (FR)
(72) Inventeur: NACCACHE, David, 75016 PARIS (FR); POLECHTCHOUCK, Pavel, 92800 PUTEAU (FR); TRICHINA, Elena, 13100 AIX EN PROVENCE (FR)
(74) Mandataire: LLR
(86) Numéro de dépôt international: PCT/FR2020/051078
(87) Numéro de publication internationale: WO 2020/260811

(56) Documents cités:
- EP-A1- 3 118 803
- US-A1- 2006 016 883
- US-A1- 2012 209 749

## Description

La présente invention concerne le domaine des transactions de paiements électroniques dans un point de vente physique. Plus précisément, l'invention vise à simplifier le transfert d'informations caractérisant un paiement, à savoir par exemple, le montant dudit paiement, déterminées à partir d'une facture client imprimée par une caisse enregistreuse électronique, à un dispositif d'acquisition de paiement, tel qu'un lecteur de carte à puce. Par mesure de concision, une telle caisse enregistreuse électronique pourra être désignée par l'acronyme ECR (pour « Electronic Cash Register » selon une terminologie anglo-saxonne) et un tel dispositif d'acquisition de paiement pourra être désigné par l'acronyme PAD (pour « Payment Acquisition Device » selon une terminologie anglo-saxonne).

Un tel transfert d'informations est souvent nécessaire pour effectuer une transaction de paiement lorsqu'un client utilise son dispositif personnel d'émission de paiement, ci-après désigné par mesure de concision par l'acronyme PID (pour « Personal Issuing Device » selon une terminologie anglo-saxonne). Un tel dispositif personnel d'émission de paiement se présente généralement sous la forme d'une carte à puce. Habituellement, les caisses enregistreuses électroniques et les dispositifs d'acquisition de paiement sont fabriqués par différents constructeurs. La liaison entre un dispositif d'acquisition de paiement à une caisse enregistreuse électronique repose donc sur une exploitation de protocoles de communication spécifiques, dont la normalisation nécessite des efforts conjoints par lesdits constructeurs concernés. De tels efforts ou compromis ne sont pas toujours possibles ou aisés, compte tenu de la grande variété de dispositifs d'acquisition de paiement et de caisses enregistreuses électroniques disponibles sur le marché.

Pour une très grande majorité de transactions de paiement exploitant un dispositif d'acquisition de paiement, un commerçant se voit donc contraint de composer ou saisir manuellement le montant imprimé sur une facture émise par sa caisse enregistreuse électronique pour le compte de son client, sur un clavier de son dispositif d'acquisition de paiement. Une telle opération fastidieuse est généralement synonyme de lenteurs dans la démarche commerciale, mais aussi de risques d'erreurs de saisie. Le document US2012/209749A1 enseigne le scan de QR codes et évoque la reconnaissance de caractères sur des éléments associés à des produits.

L'invention propose un dispositif d'acquisition de paiement selon la revendication 1, un procédé correspondant selon la revendication 5, un produit programme d'ordinateur selon la revendication 9 et un système selon la revendication 11 permettant de supprimer le recours à une telle saisie manuelle d'informations relatives à un paiement lors d'une transaction de paiement utilisant un dispositif d'acquisition de paiement. Les revendications dépendantes présentent des modes de réalisation préférés de l'invention. L'invention n'est pas limitée aux caisses enregistreuses électroniques connues et couramment usitées, mais s'applique également à toute caisse enregistreuse plus spécifique, comme par exemple, une caisse enregistreuse électronique équipant un compteur d'un taxi.

Dans la suite du document, nous désignerons par « caisse enregistreuse électronique » ou ECR, tout périphérique en capacité d'imprimer ou d'afficher, par exemple sur un écran d'ordinateur, une liste des articles ou de services achetés ou consommés, respectivement associés à un prix ou à toute autre information le caractérisant, ainsi qu'un montant total, désignant la contrepartie financière globale de l'acquisition ou de la consommation, à débiter d'un compte client si celui-ci existe, plus généralement, ledit montant d'une transaction de paiement. Une caisse enregistreuse électronique est un système conçu pour permettre la vente de produits dans un point de vente. Les caisses enregistreuses électroniques sont particulièrement adaptées à la vente d'articles au détail. Elles minimisent en effet les erreurs de registre, collectent des données d'inventaire et bien plus encore. Pour cela, une caisse enregistreuse électronique traite généralement un lot de marchandises en s'appuyant sur :
- une lecture d'informations contenues sur une étiquette de produit, généralement à l'aide d'un scanner de codes-barres ou de codes QR (« QR code » selon une terminologie anglo-saxonne) ;
- une consultation d'une base de données recensant les prix unitaires respectifs d'articles associés à différentes étiquettes de produit prédéterminées.

Chaque prix, associé à une marchandise dudit lot, est ajouté au précédent de sorte à obtenir un prix total cumulé de l'ensemble des marchandises composant le lot acheté ou consommé par un client.

Une caisse enregistreuse électronique peut par ailleurs transmettre des données d'inventaire à un système de gestion des ventes et des stocks lors de chaque vente réalisée. Elle peut en outre provoquer, c'est-à-dire de générer l'impression d'une facture à destination du client qui énumère tous les articles achetés ou consommés, associés respectivement à leurs prix, des informations d'ordre fiscal, telles que le taux et le montant d'une taxe sur la valeur ajoutée par exemple, et mentionner un montant d'achat total cumulé. On notera que dans la suite de la description, les termes provoquer et générer seront utilisés indifféremment.

En règle générale, une caisse enregistreuse électronique est associée à un point de vente fixe (également connu sous l'acronyme POS pour « Point Of Sale », selon une terminologie anglo-saxonne). Une caisse enregistreuse électronique peut ainsi être considérée comme l'une des unités d'un POS moderne. Ainsi, dans un grand nombre de situations, l'un ou l'autre des deux termes peut être utilisé de manière indifférenciée.

De la même manière, un dispositif d'acquisition de paiement ou PAD, au sens de l'invention, désigne tout appareil capable de traiter une transaction de paiement électronique, tel qu'à titre d'exemples non limitatifs, un lecteur de carte à puce portable, un lecteur de carte mobile, une tablette mobile hébergeant une application de paiement. Un appareil émetteur de paiement ou dispositif personnel d'émission de paiement désigne, quant à lui, tout dispositif client pouvant être utilisé pour effectuer une transaction de paiement électronique, tel qu'à titre d'exemples non limitatifs, une carte de débit ou de crédit, une carte-cadeaux, une application de paiement mobile implantés sur un téléphone mobile intelligent (ou « smartphone » selon une terminologie anglo-saxonne), une tablette, etc.

Selon l'état de l'art, dans de nombreuses situations de paiement lorsque des cartes de paiement électroniques ou d'autres instruments de paiement, tels que des portefeuilles mobiles, sont utilisés pour effectuer des paiements sur un point de vente physique, une liste d'articles ou de services achetés ou consommés, associés à leurs prix respectifs, et un montant total à payer sont imprimés par une caisse enregistreuse électronique sur une facture client. En variante ou en complément, une telle facture peut être affichée sur un écran de caisse enregistreuse électronique. Une telle facture, quel que soit son mode de restitution graphique ou physique, comporte généralement d'autres informations relatives à la transaction, telles que par exemple une ou plusieurs taxes, la date et l'heure de la transaction, un identifiant de transaction, le nom dudit point de vente, par exemple l'enseigne d'un magasin ou d'un restaurant, l'adresse dudit point de vente, etc. Lorsque le client choisit de payer son achat avec un dispositif personnel d'émission de paiement PID, tel qu'une carte de débit ou de crédit, la personne qui opère ledit point de vente, plus simplement, le commerçant, doit utiliser un dispositif d'acquisition de paiement, en l'espèce et généralement un lecteur de carte à puce, afin de réaliser la transaction de paiement. Selon la configuration du point de vente, ledit dispositif d'acquisition de paiement peut être fixe, portable ou mobile, connecté par câble ou sans fil à une caisse enregistreuse électronique équipant ledit point de vente. Dans certains cas, plusieurs dispositifs d'acquisition de paiement peuvent être associés à un même point de vente. Généralement, pour effectuer une transaction de paiement, les informations de paiement pertinentes, telles que le montant total à payer, doivent être transmises de la caisse enregistreuse électronique au dispositif d'acquisition de paiement. Dans la foulée, un client utilise sa carte à puce et un procédé d'authentification standard, par exemple sur la base d'un code d'identification personnel (ou PIN code, « Personal Identification Number code » selon des abréviation et terminologie anglo-saxonnes), est mis en œuvre pour procéder au paiement électronique des biens ou des services consommés.

Comme d'ores et déjà évoqué, la grande variété des caisses enregistreuses électroniques et des dispositifs d'acquisition de paiement disponibles sur le marché ne permet généralement pas un transfert automatique du montant de la transaction de la caisse enregistreuse électronique au dispositif d'acquisition de paiement. Ledit montant de la transaction, préalablement délivré sur une facture imprimée et/ou affiché sur un écran, doit donc être retranscrit manuellement sur le dispositif d'acquisition de paiement par le commerçant ou la personne chargée de réaliser un encaissement. Dans certaines situations, par exemple, dans les bars, les cafés ou les restaurants, un client n'est pas obligé de se rendre physiquement à proximité d'une caisse enregistreuse électronique. Une note ou une facture imprimée lui est remis manuellement par un serveur. Sur ladite facture apparaissent les articles achetés ou consommés, leurs prix respectifs et le montant total à payer. Lorsque le client choisit de payer avec une carte de débit ou de crédit, un serveur présente audit client un dispositif d'acquisition de paiement, généralement sous la forme d'un dispositif électronique sans fil, par exemple, un lecteur de carte portable ou mobile. Le serveur consulte visuellement la facture imprimée et recopie manuellement, à l'aide d'un clavier ou d'un écran tactile du dispositif d'acquisition de paiement, le montant de la transaction. Le client doit vérifier, s'il y pense, le montant saisi de sorte que celui-ci corresponde bien au montant imprimé sur la facture, puis compose un code secret ou réalise toute autre méthode d'authentification appropriée pour valider la transaction.

Cette copie manuelle d'informations, par exemple par un serveur de bar ou de restaurant ou plus généralement un commerçant, est chronophage, exige une attention mutuelle dudit serveur et du client pour s'assurer de la pertinence du montant du paiement recopié. Elle est sujette à erreurs, en particulier dans le cadre d'une situation stressante, par exemple, lors d'une forte affluence de clients au sein d'un même point de vente.

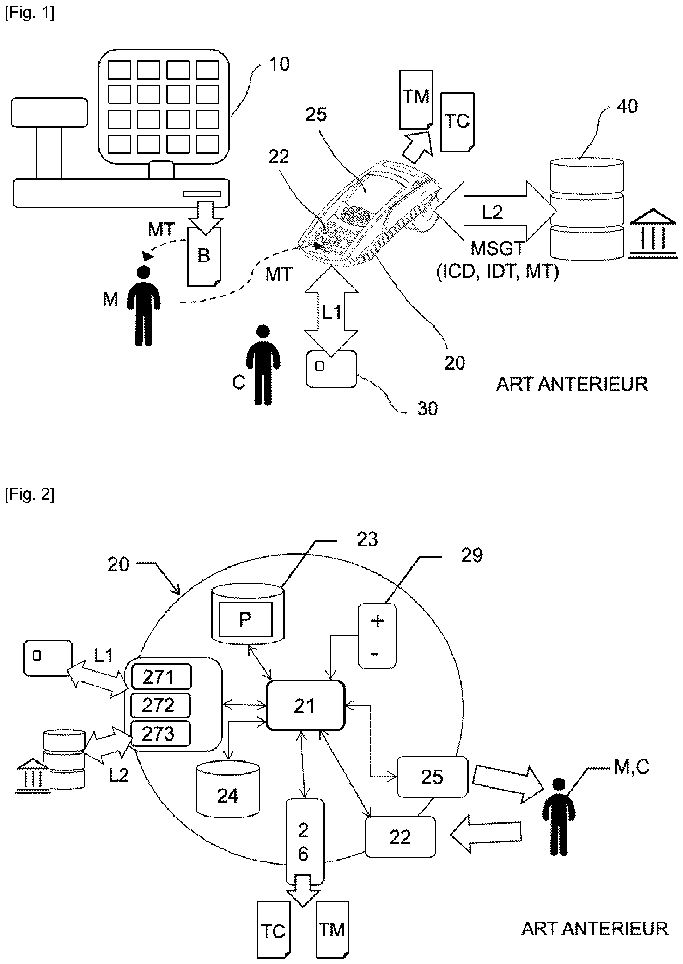

La figure 1 illustre, de manière simplifiée, un système de paiement connu reliant un point de vente physique à un serveur bancaire pour mettre en œuvre des transactions de paiement. Un tel système comporte une caisse enregistreuse électronique 10, un dispositif d'émission de paiement d'utilisateur 30, sous la forme d'une carte à puce et un dispositif d'acquisition de paiement 20. Ces trois éléments sont agencés pour interagir les uns avec les autres en toute sécurité. Selon l'exemple de la figure 1, ledit dispositif d'acquisition de paiement 20 est également agencé pour communiquer, via un canal sécurisé L2, tel que par exemple Internet, avec un serveur de paiement 40 (ci-après désigné, par mesure de concision, par l'acronyme PS pour « Payment Server » selon une terminologie anglo-saxonne).

Comme l'indique la figure 1, lors d'un achat, ladite caisse enregistreuse électronique 10 imprime et délivre, préalablement à la mise en œuvre d'une transaction de paiement en tant que telle, une facture client B qui détaille le ou les articles achetés ou consommés, leurs prix et quantités respectifs et un montant total dû.

Une telle facture B est remise en main propre ou est simplement affichée sur un écran de la caisse enregistreuse électronique 10, de sorte qu'un client C puisse la consulter.

Une grande majorité de transactions de vente sont aujourd'hui réalisées grâce à l'utilisation de dispositifs personnels d'émission de paiement, par exemple, sous la forme de cartes de crédit et/ou de débit 30. Après avoir été inséré dans, ou simplement positionné sur, un dispositif électronique apte à dialoguer avec lui, un tel dispositif personnel d'émission de paiement est apte à mettre en œuvre une communication, éventuellement sans contact, pour échanger des informations, ou pour mettre en œuvre des traitements pour le compte dudit dispositif électronique, ce dernier pouvant être un terminal de paiement ou, en l'espèce en lien avec la figure 1, un dispositif d'acquisition de paiement 20. Une telle communication entre un dispositif d'acquisition de paiement 20 et un dispositif personnel d'émission de paiement 30 peut être réalisée par une liaison L1, physique et directe, par exemple au moyen d'un bornier électrique agencé pour interagir mécaniquement et électriquement avec des plages de contacts électriques du dispositif personnel d'émission de paiement 30. Un protocole de communication, généralement conforme à la norme ISO/IEC 7816 peut être mis en œuvre par les deux objets 20 et 30 pour échanger des informations. En variante une telle liaison L1 peut être sans fil ou sans contact, par exemple de type radioélectrique, et consister en l'exploitation d'un protocole de communication de proximité conforme à la norme ISO/IEC 14443, comme le prévoit, par exemple, la norme NFC (« Near Field Communication », selon une terminologie anglo-saxonne) ou RFID (pour « radio-identification » ou « Radio Frequency Identification », selon une terminologie anglo-saxonne), ou toute solution équivalente.

Un client C peut ainsi utiliser un dispositif d'émission de paiement 30, typiquement sa carte de débit ou de crédit, qui délivre, au dispositif d'acquisition de paiement 20, des données inscrites, généralement dans un composant électronique, couramment appelé puce, ou sur une bande magnétique.

Un commerçant M peut également consulter le montant dû indiqué par la caisse enregistreuse électronique et imprimé sur une facture B puis saisir le montant de la transaction, manuellement sur un clavier du dispositif d'acquisition de paiement 20.

Le client C peut valider la transaction. Les données, en lien avec ladite transaction en tant que telle, sont alors communiquées par le dispositif d'acquisition de paiement 20 au serveur de paiement 40.

La figure 2 représente une vue simplifiée d'une architecture fonctionnelle d'un dispositif d'acquisition de paiement connu 20. Les architectures fonctionnelles respectives du dispositif personnel d'émission de paiement 30 et du serveur de paiement 40 évoqués précédemment en lien avec la figure 1 ne sont pas détaillées dans le présent document, car ces équipements ne sont pas nécessairement modifiés pour mettre en œuvre l'invention. Tout au plus, nous pouvons mentionner qu'ils disposent chacun d'une unité de traitement, sous la forme d'un ou plusieurs microprocesseurs ou microcontrôleurs, associée à des mémoires de données et de programmes, ainsi qu'à des moyens de communication ou modems, borniers et/ou antennes, leur permettant de communiquer avec le monde extérieur par des liaisons filaires (telles que par exemple, s'appuyant sur des bus d'adresses et/ou de données, Internet ou un extranet) ou sans fil, par la mise en œuvre de protocoles de communication radio, tels que le Wi-Fi (protocoles de communication sans fil régis par les normes du groupe IEEE 802.11), Bluetooth, ZigBee, NFC (« Near Field Communication », selon une terminologie anglo-saxonne) ou RFID (« Radio Frequency Identification », selon une terminologie anglo-saxonne), etc.

La figure 2 illustre donc une structure simplifiée d'un dispositif d'acquisition de paiement (PAD) 20 selon l'état actuel de la technique. Un tel dispositif d'acquisition de paiement 20 peut être un terminal de point de vente ou se présenter tel un lecteur de carte à puce mobile, fixe ou portable, ou tout autre dispositif électronique capable de communiquer avec un dispositif personnel d'émission de paiement (PID) 30 d'un client C pour effectuer une transaction de paiement. Un dispositif d'acquisition de paiement 20 est un appareil qui combine généralement des éléments matériels et logiciels. Il comporte ainsi généralement une unité de traitement 21, sous la forme d'un ou plusieurs microprocesseurs ou microcontrôleurs, une mémoire de programmes 23 et/ou une mémoire de données 24. Un dispositif d'acquisition de paiement 20 comporte en outre une interface homme-machine d'entrée 22 permettant à un utilisateur humain C, M, de saisir une information d'entrée, comme par exemple un montant d'un paiement ou encore un code d'identification personnel. Une telle interface d'entrée 22 peut consister en un clavier alphanumérique ou un écran tactile, voire un microphone, ou plus généralement tout moyen permettant à un humain d'interagir avec le dispositif d'acquisition de paiement pour lui indiquer une information ou un ordre. Un dispositif d'acquisition de paiement 20 peut en outre comporter une interface homme-machine de sortie 25, par exemple sous la forme d'un écran ou d'un haut-parleur, ou plus généralement tout moyen permettant d'indiquer à un utilisateur humain C, M, la teneur d'une information graphique ou sonore. Lorsque les interfaces d'entrée 22 et de sortie 25 consistent en un écran tactile, celles-ci peuvent être confondues. Une telle interface homme-machine de sortie 25 peut en outre consister ou comporter une imprimante 26 pour imprimer un double reçu attestant la complétude d'une transaction de paiement dont un premier volet TM est destiné à un commerçant M et un second volet TC est destiné à un client C.

En outre, un dispositif d'acquisition de paiement connu 20 comporte généralement des moyens de communication 27 avec le monde extérieur. Ainsi, pour mettre en œuvre une liaison de proximité L1 avec un dispositif personnel d'émission de paiement de tels moyens de communication 27 peuvent consister en un module de communication (bornier) 272 de type ISO/IEC 7816 ou un module 273 (antenne) de type ISO/IEC 14443. Pour mettre en œuvre une liaison de type longue distance ou de longue portée L2, de tels moyens de communication 27 peuvent comporter un module 271 de type modem ou radio, par exemple de type GSM/GPRS.

Enfin, généralement un dispositif d'acquisition de paiement connu 20 comporte une source en énergie électrique 29 interne pour délivrer aux différents organes l'apport en énergie nécessaire à leurs fonctionnements respectifs. Une telle source 29 peut consister, par exemple, en une batterie au lithium ou toute autre technologie équivalente.

La présente invention permet de répondre à tout ou partie des inconvénients soulevés par les solutions connues, notamment ceux induits par une copie manuelle d'informations par un commerçant, c'est-à-dire une perte de temps, une attention mutuelle et fastidieuse dudit commerçant et de son client pour s'assurer de la pertinence d'un montant du paiement recopié. Elle propose en effet un procédé et un système éliminant les opérations de copie ou de saisie manuelle au cours d'opérations de paiement, en particulier lorsque de telles opérations sont effectuées au moyen de dispositifs d'acquisition de paiement portables ou mobiles, tels que des lecteurs de cartes à puce. Pour cela, un dispositif d'acquisition de paiement est adapté pour automatiquement identifier puis capturer sur une facture client, les informations de paiement pertinentes pour la transaction concernée par ladite facture. La représentation numérique ou l'image découlant d'une telle capture est inscrite dans une mémoire de données du dispositif d'acquisition de paiement. Un traitement de ladite représentation numérique est mis en œuvre pour traduire, en données alphanumériques, le montant du paiement imprimé sur la facture ainsi préalablement capturée ou numérisée, lesdites données alphanumériques étant alors transmises à une unité de paiement ou à une application de paiement implantée sur un tel dispositif d'acquisition de paiement. Concomitamment, lesdites données alphanumériques peuvent être affichées sur un écran dudit dispositif d'acquisition de paiement, afin que le client puisse vérifier le montant de la transaction ainsi récupéré automatiquement et valider ladite transaction de paiement en utilisant sa carte de paiement ou tout autre dispositif personnel d'émission de paiement de manière standard. Les opérations manuelles durant le processus de paiement, par exemple par un commerçant, sont ainsi réduites, fluidifiant alors le processus de paiement et maximisant la satisfaction des clients.

A cette fin, il est notamment prévu un dispositif d'acquisition de paiement comportant une unité de traitement, une mémoire de données, une mémoire de programmes, des moyens de communication pour établir une première liaison de communication avec un serveur de paiement, une interface homme-machine d'entrée agencée pour traduire une action d'un utilisateur humain en données alphanumériques d'entrée interprétables par ladite unité de traitement, une interface homme-machine de sortie agencée pour traduire des données de sortie alphanumériques en un contenu perceptible par un utilisateur humain, ladite unité de traitement étant agencée pour élaborer un message de transaction à destination du serveur de paiement, ledit message de transaction encodant les valeurs de données décrivant respectivement un montant d'un paiement, un identificateur d'un débiteur et un identificateur d'un donneur d'ordre, ladite unité de traitement étant en outre agencée pour émettre ledit message de transaction par les moyens de communication. Pour prévenir toute saisie manuelle du montant d'un paiement de transaction et ainsi les inconvénients des solutions connues précédemment énoncés, un dispositif d'acquisition de paiement conforme à l'invention comporte des moyens de capture matricielle d'une vue d'une facture représentant graphiquement des informations de paiement, lorsque ladite facture est dans le champ de capture desdits moyens de capture, ces derniers produisant une représentation numérique de ladite facture. L'unité de traitement d'un tel dispositif d'acquisition de paiement conforme à l'invention est en outre agencée pour déterminer, sur la base de la représentation numérique produite, le montant du paiement encodé dans le message de transaction.

Pour faciliter la transaction et ainsi authentifier un client qui souhaite procéder à un encaissement par voie électronique, les moyens de communication d'un dispositif d'acquisition de paiement selon l'invention peuvent en outre être agencés pour établir une deuxième liaison de communication avec un dispositif personnel d'émission de paiement. Dans ce cas, l'unité de traitement est en outre agencée pour mettre en œuvre un procédé d'authentification du porteur dudit dispositif personnel d'émission de paiement en exploitant conjointement un code d'identification personnel renseigné via l'interface homme-machine d'entrée et des données échangées, via la deuxième liaison de communication avec ledit dispositif personnel d'émission de paiement, et pour conditionner l'émission dudit message de transaction à destination du serveur de paiement à la satisfaction des conditions requises par ledit procédé d'authentification.

Pour que le client puisse notamment s'assurer d'une détermination pertinente du montant d'un paiement par un dispositif d'acquisition de paiement conforme à l'invention, l'unité de traitement de ce dernier peut en outre être agencée pour provoquer une sortie d'un contenu traduisant le montant du paiement déterminé à partir de la représentation numérique.

Selon un deuxième objet, l'invention concerne un procédé mis en œuvre par l'unité de traitement d'un dispositif d'acquisition de paiement conforme à l'invention, et en particulier, un procédé d'élaboration d'un message de transaction pour un dispositif d'acquisition de paiement. Un tel procédé comporte une étape pour élaborer un message de transaction à destination d'un serveur de paiement, ledit message de transaction encodant les valeurs de données décrivant respectivement un montant d'un paiement, un identificateur d'un débiteur et un identificateur d'un débité, une étape pour provoquer l'émission dudit message de transaction à destination dudit serveur de paiement par les moyens de communication dudit dispositif d'acquisition de paiement. Un tel procédé comporte une étape, préalable à l'étape pour élaborer le message de transaction, pour provoquer la capture d'une vue d'une facture lorsque celle-ci est présente dans le champ de capture des moyens de capture dudit dispositif d'acquisition de paiement par ces derniers et ainsi produire et enregistrer, dans la mémoire de données dudit dispositif d'acquisition de paiement, une représentation numérique de ladite facture. Un tel procédé comporte une nouvelle étape pour identifier et/ou déterminer à partir de ladite représentation numérique, le montant d'un paiement, ladite étape pour élaborer le message de transaction encodant ledit montant de paiement ainsi déterminé pour constituer ledit message de transaction.

Pour que le client puisse s'assurer d'une détermination pertinente du montant d'un paiement, un tel procédé peut comporter une étape pour provoquer une sortie, par l'interface homme-machine de sortie du dispositif d'acquisition de paiement, d'un contenu élaboré pour traduire le montant du paiement déterminé à partir de la représentation numérique de la facture.

A titre avantageux mais non limitatif, l'étape pour identifier et/ou déterminer le montant d'un paiement à partir de la représentation numérique d'une facture, peut consister en une estimation réalisée par un réseau neuronal convolutif de l'unité de traitement d'un dispositif d'acquisition de paiement conforme à l'invention.

Selon un troisième objet, l'invention concerne en outre un produit programme d'ordinateur comportant des instructions de programme, qui lorsqu'elles sont inscrites dans la mémoire de programmes d'un dispositif d'acquisition de paiement conforme à l'invention, et interprétées ou exécutées par l'unité de traitement de ce dernier, provoquent la mise en œuvre d'un procédé également conforme à l'invention.

Selon un quatrième objet, l'invention concerne un système comportant un dispositif d'acquisition de paiement conforme à la présente invention, un serveur de paiement, une caisse enregistreuse électronique pour produire une facture capturable par les moyens de capture matricielle dudit dispositif d'acquisition.

A titre avantageux mais de manière non limitative, un tel système peut en outre comporter un dispositif personnel d'émission de paiement, lorsque le dispositif d'acquisition de paiement est agencé pour coopérer avec un tel dispositif personnel d'émission de paiement.

D'autres caractéristiques et avantages apparaîtront plus clairement à la lecture de la description qui suit et à l'examen des figures qui l'accompagnent parmi lesquelles :
[Fig.1], d'ores et déjà décrite, représente un système simplifié et connu de gestion d'une transaction de paiement depuis un point de vente jusqu'au traitement dudit paiement par un serveur de banque;
[Fig.2], d'ores et déjà décrite, présente une vue simplifiée d'une architecture fonctionnelle d'un dispositif d'acquisition de paiement connu ;
[Fig.3] présente une vue simplifiée d'une architecture fonctionnelle d'un exemple non limitatif d'un dispositif d'acquisition de paiement conforme à l'invention ;
[Fig.4] présente une vue simplifiée d'un organigramme fonctionnel d'un procédé mis en œuvre par un dispositif d'acquisition de paiement conforme à l'invention ;
[Fig.5] représente un système simplifié de gestion d'une transaction de paiement depuis un point de vente jusqu'au traitement dudit paiement par un serveur de banque, ledit système étant conforme à l'invention.

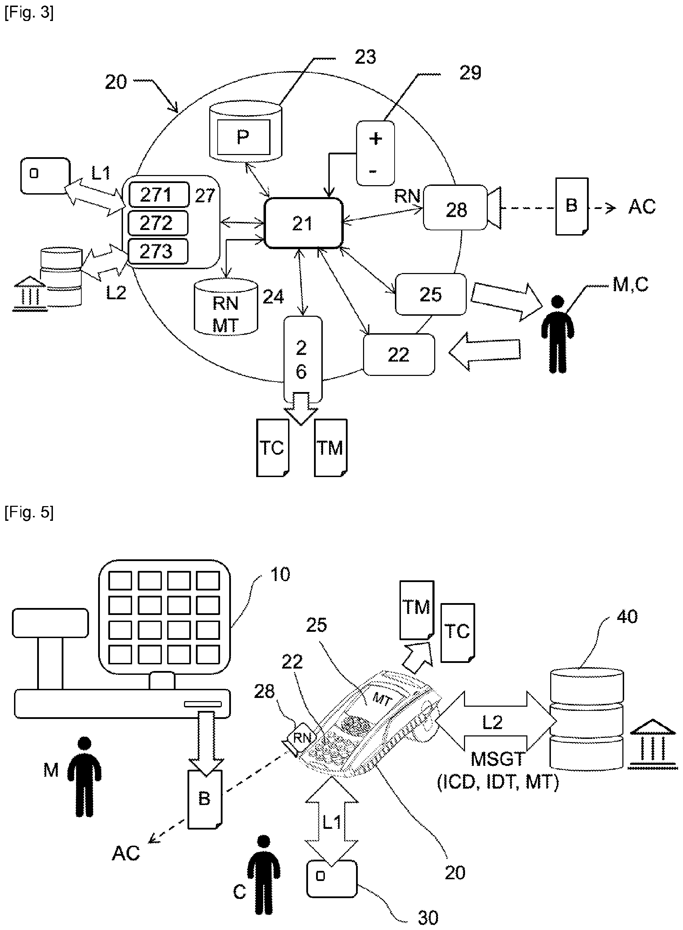

La figure 3 illustre schématiquement un dispositif d'acquisition de paiement 20 adapté selon la présente invention pour prévenir toute erreur lors d'une saisie manuelle d'un montant de paiement selon les techniques usuelles. Selon l'invention, un tel dispositif d'acquisition de paiement 20, est relativement similaire à celui-ci décrit précédemment en lien avec la figure 2. Il comporte ainsi une unité de traitement 21, sous la forme d'un ou plusieurs microprocesseurs ou microcontrôleurs, une mémoire de programmes 23 et/ou une mémoire de données de données 24. Un dispositif d'acquisition de paiement conforme à l'invention 20 comporte en outre une interface homme-machine d'entrée 22 permettant à un utilisateur humain C, M, de saisir une information d'entrée, comme par exemple un montant d'un paiement ou encore un code d'identification personnel. Une telle interface d'entrée 22 peut consister en un clavier alphanumérique ou un écran tactile, voire un microphone, ou plus généralement tout moyen permettant à un humain d'interagir avec le dispositif d'acquisition de paiement 20 pour lui indiquer une information ou un ordre. Un tel dispositif d'acquisition de paiement 20 peut en outre comporter une interface homme-machine de sortie 25, par exemple sous la forme d'un écran ou d'un haut-parleur, ou plus généralement tout moyen permettant d'indiquer à un utilisateur humain (par exemple un client C, un commerçant M), la teneur d'une information graphique ou sonore. Lorsque les interfaces d'entrée 22 et de sortie 25 consistent en un écran tactile, celles-ci peuvent être confondues. Une telle interface homme-machine de sortie 25 peut en outre consister ou comporter une imprimante 26 pour imprimer un double reçu attestant la complétude d'une transaction de paiement dont un premier volet TM est destiné à un commerçant M et un second volet TC est destiné à un client C.

En outre, un dispositif d'acquisition de paiement 20 conforme à l'invention comporte généralement des moyens de communication 27 avec le monde extérieur. Ainsi, pour mettre en œuvre une liaison de proximité L1 avec un dispositif personnel d'émission de paiement 30, de tels moyens de communication 27 peuvent consister en un module de communication (bornier) 272 de type ISO/IEC 7816 ou un module 273 (antenne) de type ISO/IEC 14443. Pour mettre en œuvre une liaison L2 de type longue distance ou de longue portée, de tels moyens de communication 27 peuvent comporter un module 271 de type modem ou radio, par exemple de type GSM/GPRS.

Avantageusement, pour gagner en autonomie, un dispositif d'acquisition de paiement 20 conforme à l'invention peut comporter une source en énergie électrique 29 interne pour délivrer aux différents organes l'apport en énergie nécessaire à leurs fonctionnements respectifs. Une telle source 29 peut consister, par exemple, en une batterie au lithium ou toute autre technologie équivalente.

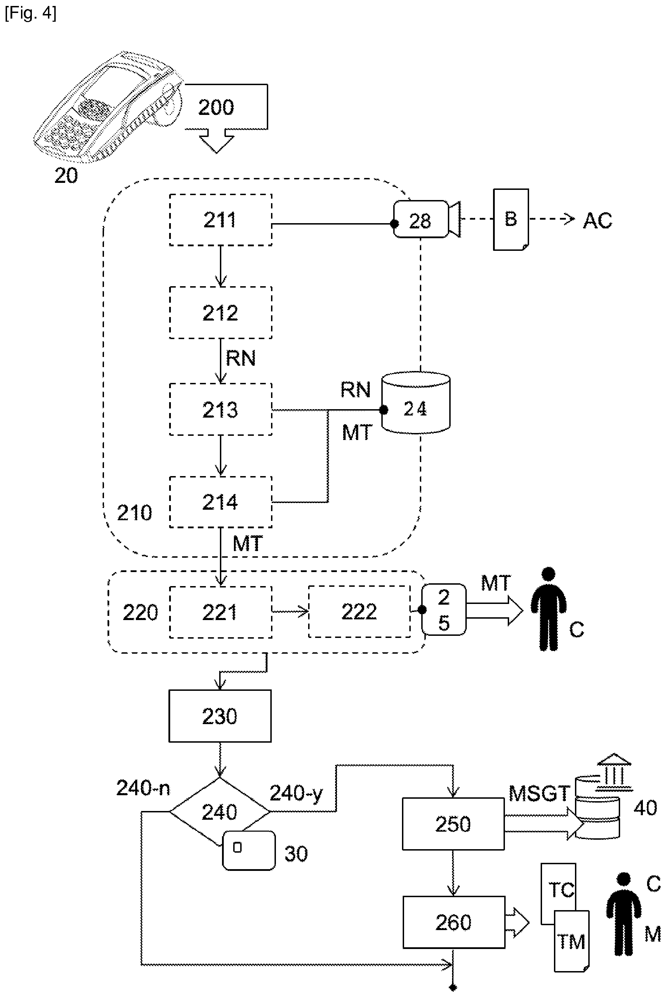

Un dispositif d'acquisition de paiement 20 conforme à l'invention se distingue notamment de l'état de l'art en ce qu'il comporte en outre des moyens 28, par exemple sous la forme d'un capteur matriciel ou d'une caméra matricielle, pour numériser tout ou partie d'une vue d'une facture B émise par une caisse enregistreuse électronique et ainsi produire une représentation numérique ou image RN du contenu, total ou partiel, de ladite facture B. Une telle représentation numérique RN peut être inscrite dans la mémoire de données 24 du dispositif d'acquisition de paiement 20 pour y être traitée. L'unité de traitement 21 peut en effet être adaptée selon l'invention pour provoquer ladite capture et pour effectuer de tels traitements au moyen d'un programme d'ordinateur P idoine, dont les instructions de programme sont inscrites dans la mémoire de programmes 23 du dispositif d'acquisition de paiement 20, et dont l'exécution ou l'interprétation par ladite unité de traitement 21 provoque la mise en œuvre d'un procédé dont un exemple est illustré ultérieurement en lien avec la figure 4.

Pour faciliter l'opération de capture ou de numérisation d'une facture B, un affichage graphique d'une vue de celle-ci, lorsque les moyens de capture 28 sont activés, peut être provoqué par l'unité de traitement 21 et mis en œuvre par l'interface de sortie 25, lorsque cette dernière consiste en, ou comprend, un écran d'ordinateur par exemple. Un utilisateur commerçant M ou client C du dispositif d'acquisition de paiement 20 peut donc positionner, de manière pertinente, la facture B au regard des moyens de capture 28 grâce à cette information graphique qui le guide dans sa gestuelle.

L'invention prévoit également que lesdits moyens 28 puissent comprendre une pluralité de capteurs matriciels. Ainsi, une pluralité de représentations numériques ou d'images RN, voire une vidéo, peut être obtenue et/ou enregistrée dans la mémoire de données 24 du dispositif d'acquisition de paiement 20. Ladite pluralité de données de capture ou d'images RN peut décrire la facture B sous des angles de capture différents ou des focalisations différentes pour faciliter la détermination future du montant du paiement MT concerné.

L'invention prévoit en outre que l'unité de traitement 21 du dispositif d'acquisition de paiement 20 soit adaptée pour déclencher la mise en œuvre de traitements de la ou des représentations numériques RN résultant de captures d'une facture B. A titre d'exemples non limitatifs, de tels traitements peuvent consister en des méthodes ou techniques de reconnaissance d'image connues pour identifier les informations de paiement utiles, ces dernières pouvant être accolées à un ou des mots clés ou, plus généralement, à des balises graphiques déterminées. De tels traitements, mis en œuvre par l'unité de traitement 21 d'un dispositif d'acquisition de paiement 20 conforme à l'invention, permettent d'identifier lesdites informations pertinentes, telles que le montant de paiement en devises, la date de la transaction, etc., puis de traduire celles-ci en données, par exemple sous la forme d'une ou plusieurs chaînes alphanumériques.

L'unité de traitement 21 est par ailleurs adaptée pour provoquer l'affichage sur l'interface homme-machine de sortie 25 du dispositif d'acquisition de paiement 20 le montant du paiement MT, ainsi automatiquement déterminé à partir de la représentation numérique RN, de sorte que les utilisateurs M et C puissent s'assurer d'une capture de la facture B pertinente. Enfin, à l'instar d'un dispositif d'acquisition de paiement 20 connu, ladite unité de traitement 21 peut provoquer la transmission desdites informations de paiement à destination d'un serveur de banque 40 approprié, après confirmation de l'identification ou d'une authentification du client C et l'exploitation classique d'un dispositif personnel d'émission de paiement 30 appartenant à ce dernier.

L'invention prévoit que l'unité de traitement 21 d'un dispositif d'acquisition de paiement 20 conforme à l'invention puisse en outre être adaptée pour enregistrer, dans la mémoire de données 24, les différentes informations de paiement de chaque transaction, de sorte à faciliter toute opération éventuelle de contrôle de caisse ou d'inventaire. Ainsi, les informations de paiement pour chaque paiement réalisé, et donc acquis, par le dispositif 20 du commerçant M sont stockées dans la mémoire de données 24. Ces informations de paiement peuvent donc être facilement extraites de la mémoire de données 24 pour permettre au commerçant M pour par exemple contrôler les paiements acquis par les différents clients C sur un même dispositif d'acquisition de paiement 20. Par ailleurs, les différents éléments électroniques 22 à 29 coopèrent ainsi chacun avec l'unité de traitement 21 via des bus de communication d'alimentation et/ou de commande représentés par des flèches sur la figure 3. Certains pourraient coopérer, en variante, par couplage.

Nous pouvons constater que l'invention n'entraîne pas de modifications structurelles ou logicielles des dispositifs personnel d'émission de paiement (PID), des terminaux (POS) ou des caisses enregistreuses électroniques (ECR) existants. Seuls les dispositifs d'acquisition de paiement (PAD) conformes à l'invention nécessitent une éventuelle modification matérielle par l'ajout de moyens de capture matricielle 28. L'invention porte principalement sur une adaptation du fonctionnement de l'unité de traitement 21 d'un tel dispositif d'acquisition de paiement 20 par une modification ou un agencement d'un programme d'ordinateur P dont les instructions de programme sont chargées dans la mémoire de programmes 23 de ce dernier.

A ce titre, la figure 4 présente un organigramme illustrant un procédé destiné à adapter le fonctionnement d'un dispositif d'acquisition de paiement lorsque celui-ci est agencé conformément à l'invention, par exemple tel que le dispositif 20 décrit précédemment, à titre d'exemple préféré et non limitatif, par la figure 3. Comme le montre l'organigramme, un procédé 200, mis en œuvre par l'unité de traitement d'un dispositif d'acquisition de paiement conforme à l'invention, comporte, à l'instar d'un procédé mis en œuvre par un PAD connu, une étape 230 pour élaborer un message de transaction MSGT à destination d'un serveur de paiement (référencé 40 sur les figures), ledit message de transaction MSGT encodant des valeurs de données décrivant généralement et respectivement un montant d'un paiement MT, un identificateur d'un débiteur d'encaissement IDM et un identificateur d'un débité ou tireur IDC (c'est-à-dire celui qui doit s'acquitter d'un paiement pour le profit du débiteur). Un tel procédé 200 comporte en outre une étape 250 pour provoquer l'émission dudit message de transaction MSGT à destination dudit serveur de paiement 40 par les moyens de communication, référencés 27 en figures 2 et 3, du dispositif d'acquisition de paiement 20.

De manière classique et connue, un tel procédé 200 peut en outre comporter une étape 240 visant à conditionner l'émission dudit message MSGT à la satisfaction d'une procédure d'authentification du client C, lorsque celui-ci souhaite procéder audit paiement au moyen d'un dispositif personnel d'émission de paiement (référencé 30 sur les figures 2 et 3) tel qu'une carte bancaire de débit et/ou crédit. Dans ce cas, une telle étape 240 peut consister à solliciter ledit dispositif personnel d'émission de paiement 30, en lui communicant un challenge, généralement sous la forme d'une chaîne alphanumérique, de sorte que ledit dispositif personnel d'émission de paiement 30 puisse comparer ledit challenge à un mot référence et retourner au dispositif d'acquisition de paiement 20, une donnée résultat attestant d'une conformité ou d'une non-conformité dudit challenge au regard dudit mot référence. Dans le cas où l'étape 240 atteste d'un échec d'authentification ou d'une non-conformité (situation symbolisée par le lien 240-n en figure 4), le message de transaction MSGT n'est pas transmis au serveur bancaire 40 et une étape subséquente 260 du procédé 200 consiste à délivrer, par des moyens de sortie 26 ou 25 du dispositif d'acquisition de paiement 20, un double reçu graphique ou imprimé, relatant l'échec de la transaction, un volet dudit double reçu TM étant à destination du commerçant M et un second volet TC étant destiné au client C. Lorsque l'étape 240 atteste d'un succès d'authentification ou d'une conformité du challenge au regard du mot référence (situation symbolisée par le lien 240-y en figure 4), le message de transaction MSGT peut être transmis, en l'étape 250, au serveur de paiement 40. L'étape 260 peut consister alors en la délivrance d'un double reçu TM, TC confirmant respectivement au commerçant M et au client C, la complétude de la transaction financière.

Selon les techniques de l'état de l'art, comme évoqué précédemment, pour mettre en œuvre l'étape 230, il est nécessaire de connaître le montant MT de la transaction. Pour cela, un procédé mis en œuvre par un PAD connu comporte une étape, non indiquée sur la figure 4 car supprimée grâce à l'invention, pour interroger l'interface homme-machine d'entrée 22 du dispositif d'acquisition de paiement. En effet, pour un PAD connu, ledit montant d'un paiement doit être saisi par le commerçant à l'aide le plus souvent d'un clavier.

Pour éviter cette saisie manuelle, un procédé 200 conforme à l'invention comporte une étape ou plus généralement un traitement 210, préalable à l'étape 230 pour élaborer le message de transaction MSGT, pour provoquer 211 la capture, par les moyens de capture matricielle 28 dudit dispositif d'acquisition de paiement 20, de tout ou partie d'une vue d'une facture B lorsque ladite facture est présente dans le champ de capture AC desdits moyens de capture matricielle 28, puis produire 212, et enregistrer 213, dans la mémoire de données 24 dudit dispositif d'acquisition de paiement 20, une représentation numérique RN de ladite facture B. La représentation numérique RN obtenue peut s'apparenter à une image composée d'une matrice de pixels dont chacun décrit une ou plusieurs intensités lumineuses. Un tel traitement 210 d'un procédé 200 conforme à l'invention comporte une étape 214 pour identifier et déterminer, à partir de ladite représentation numérique RN, le montant MT d'un paiement. Pour cela, ladite étape 214 peut mettre en œuvre, par exemples non limitatifs, des techniques de reconnaissance de caractères connues pour traduire une partie de la représentation numérique RN en une chaîne de caractères alphanumériques, voire en données numériques traduisant le montant de paiement MT. Pour faciliter une telle étape 214, la facture B peut comporter une balise, ou plus généralement un symbole graphique déterminé, accolé(e) au montant du paiement. En variante, l'invention prévoit qu'un tel montant puisse apparaître en clair sous une forme numérique ou qu'il puisse apparaître sous une forme graphique, comme par exemple encodé sous la forme d'un code-barres ou un QR-code.

L'invention prévoit en outre que l'étape de détermination du montant d'un paiement puisse être plus complexe pour répondre à des cas d'application selon lesquels, par exemple dans des bars, des restaurants, des taxis, etc., un client est amené à ajouter un pourboire à un montant à payer pour des articles ou services achetés et/ou consommés. Dans de tels cas d'application, une facture B délivrée à un client comporte souvent une ligne ou un espace supplémentaire que le client doit remplir manuellement, à l'aide d'un stylo ou via une interface homme-machine adaptée d'une caisse enregistreuse électronique, pour indiquer un montant de pourboire. Ledit client doit généralement calculer mentalement le montant total qu'il doit payer dans le cadre d'une transaction de paiement, lors de signature de ladite facture B. Dans ce cas, le traitement 210 peut consister à déterminer différents champs graphiques associés respectivement à des montants à comptabiliser, au sein d'une représentation numérique RN résultant 212 de la capture 211 d'une telle facture B préalablement renseignée par le client, puis décoder, mémoriser et additionner les valeurs numériques des différents champs graphiques associés respectivement aux montants à comptabiliser pour obtenir le montant total MT de la transaction de paiement que l'on souhaite mettre en œuvre. A l'instar d'un montant total directement imprimé, une telle étape de détermination 214 peut être facilitée si la facture B comporte une balise, ou plus généralement un symbole graphique déterminé, accolé(e) à chaque montant que l'unité de traitement 21 doit comptabiliser pour obtenir le montant total du paiement MT.

L'invention prévoit, en variante ou en complément, que ladite unité de traitement 21 puisse être agencée pour comporter, par exemple, un réseau neuronal convolutif. Dans ce cas, l'étape 214 pour déterminer un montant total MT d'un paiement peut avantageusement consister en une estimation réalisée par un tel réseau neuronal convolutif. Selon un tel mode de réalisation avantageux, un procédé 200 conforme à l'invention peut comporter une étape préalable d'apprentissage dudit réseau neuronal convolutif, non représentée en figure 4, pour que ledit réseau neuronal convolutif puisse identifier les champs pertinents au sein de la représentation numérique RN et/ou déchiffrer certaines informations manuscrites présentes sur une facture B. Une telle assistance à l'étape 214 par une « intelligence artificielle », en l'espèce selon cet exemple non limitatif, au moyen d'un réseau neuronal convolutif ou de toute autre technologie équivalente, peut permettre une exploitation conjointe de différentes représentations numériques RN résultant de la capture concomitante de ladite facture B par des moyens de capture matricielle 28 comportant une pluralité de capteurs matriciels. Ainsi, une pluralité de représentations numériques ou d'images RN, voire une vidéo, peut être obtenue et/ou enregistrée dans la mémoire de données 24 du dispositif d'acquisition de paiement. Ladite pluralité de données de capture ou d'images RN peut décrire la facture B sous des angles de capture différents ou des focalisations différentes pour faciliter la détermination 214 du montant du paiement MT concerné.

L'étape 214 peut en outre consister en une comparaison du montant de paiement déterminé en l'étape 214 avec celui inscrit manuellement par le client sur la facture B capturée, de sorte à pouvoir afficher un message d'erreur en cas de non égalité desdits montants déterminé pour l'un, et inscrit pour l'autre. Un procédé 200 conforme à l'invention peut alors comporter une étape non représentée en figure 4, pour provoquer, par l'interface homme-machine de sortie 25 du dispositif d'acquisition de paiement 20, une invitation au client C pour que ce dernier choisisse une option parmi une pluralité, pour par exemple, annuler la transaction ou poursuivre celle-ci après avoir corrigé la saisie manuelle sur la facture B.

Quel que soit le mode de réalisation du traitement 210 d'un procédé 200 conforme à l'invention, l'étape 230 de ce dernier consiste finalement à exploiter le montant de paiement MT ainsi déterminé pour élaborer le message de transaction MSGT.

La figure 5 décrit un système de paiement simplifié au niveau d'un point de vente physique, similaire à celui décrit en lien avec la figure 1. Toutefois, le dispositif d'acquisition de paiement 20 est agencé conformément à l'invention. Il comporte à ce titre des moyens de capture matricielle 28 d'une vue d'une facture B émise par une caisse enregistreuse électronique conventionnelle 10. L'unité de traitement 21 dudit dispositif d'acquisition de paiement 20 est alors agencée pour provoquer la capture d'au moins une représentation numérique ou image RN de ladite facture B et pour détecter et déterminer automatiquement le montant de paiement MT de la transaction financière. Ainsi, comme illustré par la figure 5, un système conforme à l'invention comporte une caisse enregistreuse électronique 10 associée à un point de vente physique d'un commerçant M, un dispositif d'acquisition de paiement 20 pour coopérer, via une liaison L1, avec un dispositif d'émission de paiement 30 d'un client C. Ledit dispositif d'acquisition de paiement 20 du commerçant est également agencé pour coopérer, via une liaison L2, avec un serveur de paiement 40 d'une banque, par exemple.

Comme illustré par la figure 5, après avoir vendu un ou plusieurs articles à un client C, un commerçant M actionne une caisse enregistreuse électronique 10 qui délivre une facture B imprimée sur papier audit client C. Contrairement au système conventionnel décrit en lien avec la figure 1 selon lequel ledit commerçant M doit ressaisir manuellement le montant de paiement MT, imprimé sur la facture B, sur le clavier ou plus généralement via une interface homme-machine d'entrée d'un dispositif d'acquisition de paiement 20, ce dernier étant agencé conformément à l'invention, ledit commerçant M positionne ladite facture B, dans le champ de capture AC des moyens de capture matricielle 28 dudit dispositif d'acquisition de paiement 20. L'unité de traitement de ce dernier provoque la numérisation d'une vue de ladite facture B, détermine automatiquement le montant du paiement imprimé sur ladite facture B et prépare un message MSGT décrivant la transaction à destination du serveur de paiement 40, ledit message MSGT véhiculant la valeur du montant de paiement MT ainsi automatiquement déterminée par le dispositif d'acquisition de paiement 20. Avant que ledit message MSGT ne soit transmis au serveur de paiement 40, le dispositif d'acquisition de paiement 20 peut présenter le montant du paiement MT automatiquement déterminé via son interface homme-machine de sortie 25. Le client C peut valider la transaction en prenant note du montant de paiement pertinemment déterminé et peut répondre à l'invitation l'incitant à saisir, via l'interface homme-machine d'entrée 22 du dispositif d'acquisition de paiement 20, son code d'identification personnel associé à son dispositif d'émission de paiement 30 préalablement remis au commerçant M, de sorte que ce dernier puisse mettre en communication L1 les deux dispositifs 20 et 30. Le commerçant M n'a donc plus à saisir un quelconque montant de paiement via l'interface homme-machine d'entrée 22 du dispositif d'acquisition de paiement 20, ce dernier se chargeant automatiquement de déterminer le montant MT de la transaction prévenant ainsi toute erreur et ralentissement des encaissements.

Enfin, l'unité de traitement 21 du dispositif d'acquisition de paiement 20 peut en particulier enregistrer l'ensemble des informations de paiement de chaque transaction dans la mémoire de données 24. Cela permet notamment au commerçant M de d'extraire de la mémoire du dispositif d'acquisition de paiement 20, l'ensemble des informations de paiement de chaque transaction réalisée sur le dispositif de paiement 20 par un ou plusieurs clients (C), par exemple sur une période donnée. Ainsi, cela permet par exemple au commerçant M de pouvoir réaliser facilement et rapidement des opérations de contrôle de caisse ou d'inventaire. On notera que les informations stockées peuvent être limitées aux seules informations autorisées à être conservées par le commerçant conformément aux réglementations en vigueur relatives aux transactions bancaires.

Bien que la présente invention ait été décrite en référence à des exemples de réalisation spécifiques notamment en lien avec la figure 5, ladite invention ne se limite pas auxdits modes de réalisation décrits. En conséquence, la description et les dessins doivent être considérés dans un sens illustratif et non limitatif.

## Revendications

1. Dispositif d'acquisition de paiement (20) pour un commerçant M, comportant une unité de traitement (21), une mémoire de données (24) destinée à stocker des informations de paiement pour chaque paiement acquis par le dispositif (20), une mémoire de programmes (23), des moyens de communication (27) pour établir une première liaison de communication (L2) avec un serveur de paiement (40), une interface homme-machine d'entrée (22) agencée pour traduire une action d'un utilisateur humain (C,M) en données alphanumériques d'entrée interprétables par ladite unité de traitement (21), une interface homme-machine de sortie (25) agencée pour traduire des données de sortie alphanumériques en un contenu perceptible par un utilisateur humain (C,M), ladite unité de traitement (21) étant agencée pour élaborer un message de transaction (MSGT) à destination du serveur de paiement (40), ledit message de transaction (MSGT) encodant des valeurs de données décrivant un montant d'un paiement (MT), ladite unité de traitement (21) étant en outre agencée pour émettre ledit message de transaction (MSGT) par les moyens de communication (27), ledit dispositif d'acquisition de paiement (20) étant en outre agencé pour comporter des moyens de capture matricielle (28) d'une vue d'une facture (B) représentant graphiquement des informations de paiement, lorsque ladite facture (B) est dans le champ de capture desdits moyens de capture (28), ces derniers (28) produisant une représentation numérique (RN) de ladite facture (B), l'unité de traitement (21) étant en outre agencée pour identifier et déterminer, sur la base de la représentation numérique (RN) produite, et par reconnaissance de caractères pour traduire une partie de la représentation numérique (RN) en une chaîne de caractères alphanumériques, le montant du paiement (MT) encodé dans le message de transaction (MSGT), l'unité de traitement étant en outre agencée pour déterminer différents champs graphiques associés respectivement à des montants à comptabiliser, au sein de la représentation numérique (RN) puis décoder, mémoriser et additionner les valeurs numériques des différents champs graphiques associés respectivement aux montants à comptabiliser pour obtenir le montant du paiement (MT).

2. Dispositif d'acquisition de paiement (20) selon la revendication précédente, pour lequel les moyens de communication (27) sont en outre agencés pour établir une deuxième liaison de communication (L1) avec un dispositif personnel d'émission de paiement (30), et pour lequel l'unité de traitement (21) est en outre agencée pour mettre en œuvre un procédé d'authentification du porteur (C) dudit dispositif personnel d'émission de paiement (30) en exploitant conjointement un code d'identification personnel renseigné via l'interface homme-machine d'entrée (22) et des données échangées, via la deuxième liaison de communication (L1), avec ledit dispositif personnel d'émission de paiement (30), et pour conditionner l'émission dudit message de transaction (MSGT), à destination du serveur de paiement (40), à la satisfaction des conditions requises par ledit procédé d'authentification.

3. Dispositif d'acquisition de paiement (20) selon l'une des revendications précédentes, pour lequel l'unité de traitement (21) est en outre agencée pour provoquer une sortie d'un contenu, traduisant le montant du paiement (MT) déterminé à partir de la représentation numérique (RN), par l'interface homme-machine de sortie (25).

4. Dispositif d'acquisition de paiement (20) selon l'une quelconque des revendications précédentes, dans lequel l'unité de mémoire (24) stocke des informations de paiement de chaque transaction réalisée par le dispositif d'acquisition de paiement (20).

5. Procédé (200) d'élaboration d'un message de transaction pour dispositif d'acquisition de paiement (20) pour un commerçant M, comprenant :
- une étape (230) d'élaboration d'un message de transaction (MSGT) à destination d'un serveur de paiement (40), ledit message de transaction (MSGT) encodant des valeurs de données décrivant un montant d'un paiement (MT),
- une étape (250) pour générer l'émission dudit message de transaction (MSGT) à destination dudit serveur de paiement (40) par des moyens de communication (27) du dispositif d'acquisition de paiement (20), le montant de paiement (MT) étant déterminé au moyen des étapes suivantes :
- une étape, préalable à l'étape (230) d'élaboration du message de transaction, de traitement (210) et de capture (211) d'une représentation d'une facture (B), par des moyens de capture matricielle (28) du dispositif d'acquisition de paiement (20),
- une étape de production (212) et d'enregistrement (213) dans une mémoire de données (24) dudit dispositif d'acquisition de paiement (20), d'une représentation numérique (RN) de la facture (B),
- une étape (214) d'identification et de détermination à partir de la représentation numérique (RN), et par reconnaissance de caractères pour traduire une partie de la représentation numérique (RN) en une chaîne de caractères alphanumériques, du montant de paiement (MT),
- une étape de détermination de différents champs graphiques associés respectivement à des montants à comptabiliser, au sein de la représentation numérique (RN), puis
- des étapes respectives de décodage, mémorisation et addition des valeurs numériques des différents champs graphiques associés respectivement aux montants à comptabiliser pour obtenir le montant du paiement (MT).

6. Procédé selon la revendication précédente, comportant une étape (220) pour provoquer (222) une sortie, par l'interface homme-machine de sortie (25) du dispositif d'acquisition de paiement (20), d'un contenu élaboré (221) pour traduire le montant du paiement (MT) déterminé à partir de la représentation numérique (RN).

7. Procédé (200) selon l'une quelconque des revendications 5 et 6, pour lequel l'étape (214) pour identifier et/ou déterminer à partir de la représentation numérique (RN) d'une facture (B), le montant d'un paiement (MT) consiste en une estimation réalisée par un réseau neuronal convolutif de l'unité de traitement (21) du dispositif d'acquisition de paiement (20).

8. Procédé (200) selon l'une quelconque des revendications 5 à 7, dans lequel le procédé (200) est mis en œuvre par une unité de traitement (21) d'un dispositif d'acquisition de paiement (20) selon l'une quelconque des revendications 1 à 4.

9. Produit programme d'ordinateur (P) comportant des instructions de programme, qui lorsqu'elles sont inscrites dans la mémoire de programmes (23) d'un dispositif d'acquisition de paiement (20) conforme à l'une des revendications 1 à 4, et interprétées ou exécutées par l'unité de traitement (21) de ce dernier, provoquent la mise en œuvre d'un procédé selon l'une quelconque des revendications 5 à 8.

10. Dispositif d'acquisition de paiement (20) selon l'une quelconque des revendications 1 à 4, pour lequel la mémoire de programmes (23) comporte les instructions d'un produit programme d'ordinateur (P) selon la revendication 9.

11. Système comportant un dispositif d'acquisition de paiement (20) conforme à l'une quelconque des revendication 1 à 4 et 10, un serveur de paiement (40), une caisse enregistreuse électronique (10) pour produire une facture (B) dont une vue est capturable par les moyens de capture matricielle (28) dudit dispositif d'acquisition de paiement (20), lorsque ladite facture (B) est positionnée dans le champ de capture (AC) desdits moyens de capture matricielle (28).

12. Système selon la revendication précédente comportant un dispositif personnel d'émission de paiement (30) lorsque le dispositif d'acquisition de paiement (20) est conforme à la revendication 2.

## Patentansprüche

1. Vorrichtung zur Erfassung elektronischer Zahlungen (20) für einen Händler M, aufweisend eine Verarbeitungseinheit (21), einen Datenspeicher (24), der dazu bestimmt ist, Zahlungsinformationen für jede durch die Vorrichtung (20) erfasste Zahlung zu speichern, einen Programmspeicher (23), Kommunikationsmittel (27) zum Aufbau einer ersten Kommunikationsverbindung (L2) mit einem Zahlungsserver (40), eine Mensch-Maschine-Eingabeschnittstelle (22), die eingerichtet ist, eine Aktion eines menschlichen Benutzers (C, M) in alphanumerische Eingabedaten zu übersetzen, die von der genannten Verarbeitungseinheit (21) interpretiert werden können, eine Mensch-Maschine-Ausgangsschnittstelle (25), die dazu eingerichtet ist, alphanumerische Ausgangsdaten in einen für einen menschlichen Benutzer (CM) wahrnehmbaren Inhalt zu übersetzen, wobei die Verarbeitungseinheit (21) dazu eingerichtet ist, eine Transaktionsnachricht (MSGT) an den Zahlungsserver (40) zu erstellen, wobei die Transaktionsnachricht (MSGT) Datenwerte kodiert, die einen Betrag einer Zahlung (MT) beschreiben, wobei die Verarbeitungseinheit (21) ferner eingerichtet ist, die Transaktionsnachricht (MSGT) über die Kommunikationsmittel (27) zu senden, wobei die Vorrichtung zur Erfassung elektronischer Zahlungen (20) ferner eingerichtet ist, um Mittel zur Matrixerfassung (28) einer Ansicht einer Rechnung (B) aufzuweisen, die Zahlungsinformationen grafisch darstellt, wenn sich die Rechnung (B) im Erfassungsbereich der Erfassungsmittel (28) befindet, wobei die Letzteren (28) eine digitale Darstellung (RN) der Rechnung (B) erzeugen, wobei die Verarbeitungseinheit (21) ferner dazu eingerichtet ist, dass sie auf der Grundlage der erzeugten digitalen Darstellung (RN), und durch Zeichenerkennung, um einen Teil der digitalen Darstellung (RN) in eine Kette alphanumerischer Zeichen zu übersetzen, den Zahlungsbetrag (MT), der in der Transaktionsnachricht (MSGT) kodiert ist, identifiziert und bestimmt, wobei die Verarbeitungseinheit ferner dazu eingerichtet ist, innerhalb der digitalen Darstellung (RN) verschiedene grafische Felder zu bestimmen, die jeweils mit den zu verbuchenden Beträgen verbunden sind, und dann die numerischen Werte der verschiedenen grafischen Felder, die jeweils mit den zu verbuchenden Beträgen verbunden sind, zu dekodieren, zu speichern und zu addieren, um den Zahlungsbetrag (MT) zu erhalten.

2. Vorrichtung zur Erfassung elektronischer Zahlungen (20) nach dem vorhergehenden Anspruch, bei der die Kommunikationsmittel (27) zusätzlich dazu eingerichtet sind, eine zweite Kommunikationsverbindung (L1) mit einem persönlichen Zahlungsauslösegerät (30) herzustellen, und bei der die Verarbeitungseinheit (21) ferner dazu eingerichtet ist, dass sie ein Verfahren zur Authentifizierung des Inhabers (C) des persönlichen Zahlungsauslösegeräts (30) durch gemeinsame Auswertung eines über die Mensch-Maschine-Eingabeschnittstelle (22) mitgeteilten persönlichen Identifikationscodes und ausgetauschter Daten durchführt, über die zweite Kommunikationsverbindung (L1) mit dem persönlichen Zahlungsauslösegerät (30), und dazu eingerichtet ist, das Senden der Transaktionsnachricht (MSGT) an den Zahlungsserver (40) von der Erfüllung der Bedingungen abhängig zu machen, die durch das Authentifizierungsverfahren gefordert werden.

3. Vorrichtung zur Erfassung elektronischer Zahlungen (20) nach einem der vorhergehenden Ansprüche, bei der die Verarbeitungseinheit (21) ferner dazu eingerichtet ist, dass sie die Ausgabe eines Inhalts, der den aus der digitalen Darstellung (RN) bestimmten Zahlungsbetrag (MT) übersetzt, durch die Mensch-Maschine-Ausgabeschnittstelle (25) bewirkt.

4. Vorrichtung zur Erfassung elektronischer Zahlungen (20) nach einem der vorhergehenden Ansprüche, wobei die Speichereinheit (24) Zahlungsinformationen jeder Transaktion speichert, die durch die Vorrichtung zur Erfassung elektronischer Zahlungen (20) durchgeführt wird.

5. Verfahren (200) zum Erstellen einer Transaktionsnachricht für eine Vorrichtung zur Erfassung elektronischer Zahlungen (20) für einen Händler M, umfassend:
- einen Schritt (230) des Erstellens einer Transaktionsnachricht (MSGT) an einen Zahlungsserver (40), wobei die Transaktionsnachricht (MSGT) Datenwerte kodiert, die einen Betrag einer Zahlung (MT) beschreiben,
- einen Schritt (250) des Erzeugens der Übertragung der Transaktionsnachricht (MSGT) an den Zahlungsserver (40) durch Kommunikationsmittel (27) der Vorrichtung zur Erfassung elektronischer Zahlungen (20), wobei der Betrag der Zahlung (MT) mittels der folgenden Schritte bestimmt wird:
- einen Schritt, der dem Schritt (230) des Erstellens der Transaktionsnachricht vorausgeht, des Verarbeitens (210) und des Erfassens (211) einer Darstellung einer Rechnung (B) durch Mittel zur Matrixerfassung (28) der Vorrichtung zur Erfassung elektronischer Zahlungen (20),
- einen Schritt des Erzeugens (212) und Speicherns (213) einer digitalen Darstellung (RN) der Rechnung (B) in einem Datenspeicher (24) der Vorrichtung zur Erfassung elektronischer Zahlungen (20),
- einen Schritt (214) des Identifizierens und Bestimmens des Zahlungsbetrags (MT) anhand der digitalen Darstellung (RN) und durch Zeichenerkennung, um einen Teil der digitalen Darstellung (RN) in eine Kette alphanumerischer Zeichen zu übersetzen,
- einen Schritt des Bestimmens verschiedener grafischer Felder, die jeweils mit den zu verbuchenden Beträgen verbunden sind, innerhalb der numerischen Darstellung (RN), dann
- jeweilige Schritte des Decodierens, Speicherns und Addierens der numerischen Werte der verschiedenen grafischen Felder, die jeweils den zu verbuchenden Beträgen zugeordnet sind, um den Zahlungsbetrag (MT) zu erhalten.

6. Verfahren nach dem vorhergehenden Anspruch, aufweisend einen Schritt (220) des Bewirkens (222), dass die Mensch-Maschine-Ausgabeschnittstelle (25) der Vorrichtung zur Erfassung elektronischer Zahlungen (20) einen Inhalt ausgibt (221), um den aus der digitalen Darstellung (RN) ermittelten Zahlungsbetrag (MT) zu übersetzen.

7. Verfahren (200) nach einem der Ansprüche 5 und 6, bei dem der Schritt (214) des Identifizierens und/oder Bestimmens des Betrags einer Zahlung (MT) anhand der digitalen Darstellung (RN) einer Rechnung (B) aus einer Schätzung besteht, die von einem faltenden neuronalen Netz der Verarbeitungseinheit (21) der Vorrichtung zur Erfassung elektronischer Zahlungen (20) durchgeführt wird.

8. Verfahren (200) nach einem der Ansprüche 5 bis 7, wobei das Verfahren (200) von einer Verarbeitungseinheit (21) einer Vorrichtung zur Erfassung elektronischer Zahlungen (20) nach einem der Ansprüche 1 bis 4 ausgeführt wird.

9. Computerprogrammprodukt (P) mit Programmbefehlen, die, wenn sie in den Programmspeicher (23) einer Vorrichtung zur Erfassung elektronischer Zahlungen (20) nach einem der Ansprüche 1 bis 4 geschrieben und von deren Verarbeitungseinheit (21) interpretiert oder ausgeführt werden, die Durchführung eines Verfahrens nach einem der Ansprüche 5 bis 8 bewirken.

10. Vorrichtung zur Erfassung elektronischer Zahlungen (20) nach einem der Ansprüche 1 bis 4, bei der der Programmspeicher (23) die Anweisungen eines Computerprogrammprodukts (P) nach Anspruch 9 enthält.

11. System aufweisend eine Vorrichtung zur Erfassung elektronischer Zahlungen (20) nach einem der Ansprüche 1 bis 4 und 10, einen Zahlungsserver (40), eine elektronische Registrierkasse (10) zum Erzeugen einer Rechnung (B), von der eine Ansicht durch die Mittel zur Matrixerfassung (28) der Vorrichtung zur Erfassung elektronischer Zahlungen (20) erfasst werden kann, wenn die Rechnung (B) in dem Erfassungsfeld (AC) der Mittel zur Matrixerfassung (28) positioniert ist.

12. System nach dem vorhergehenden Anspruch aufweisend ein persönliches Zahlungsauslösegerät (30), wenn die Vorrichtung zur Erfassung elektronischer Zahlungen (20) Anspruch 2 entspricht.

## Claims

1. A payment acquisition device (20) for a merchant M, comprising a processing unit (21), a data memory (24) for storing payment information for each payment acquired by the device (20), a program memory (23), communication means (27) for establishing a first communication link (L2) with a payment server (40), an input man-machine interface (22) arranged to translate an action of a human user (C,M) into alphanumeric input data interpretable by said processing unit (21), an output man-machine interface (25) arranged to translate alphanumeric output data into content perceptible by a human user (C,M), said processing unit (21) being arranged to generate a transaction message (MSGT) for the payment server (40), said transaction message (MSGT) encoding data values describing an amount of a payment (MT), said processing unit (21) being further arranged to transmit said transaction message (MSGT) via communication means (27), said payment acquiring device (20) being further arranged to comprise means for matrix capture (28) of a view of an invoice (B) graphically representing payment information, when said invoice (B) is in the capture field of said capture means (28), the latter (28) producing a digital representation (RN) of said invoice (B), the processing unit (21) being further arranged to identify and determine, on the basis of the digital representation (RN) produced, and by character recognition to translate part of the digital representation (RN) into a string of alphanumeric characters, the payment amount (MT) encoded in the transaction message (MSGT), the processing unit being further arranged to determine different graphic fields associated respectively with amounts to be accounted for, within the digital representation (RN) and then decode, store and sum the numeric values of the different graphic fields associated respectively with the amounts to be accounted for to obtain the payment amount (MT).

2. Payment acquisition device (20) according to the preceding claim, for which the communication means (27) are further arranged to establish a second communication link (L1) with a personal payment issuing device (30), and for which the processing unit (21) is further arranged to implement a method of authenticating the bearer (C) of said personal payment issuing device (30) by jointly exploiting a personal identification code informed via the input man-machine interface (22) and data exchanged, via the second communication link (L1), with said personal payment issuing device (30), and to condition transmission of said transaction message (MSGT), to the payment server (40), on satisfaction of the conditions required by said authentication method.

3. Payment acquisition device (20) according to one of the preceding claims, for which the processing unit (21) is further arranged to cause an output of a content, translating the payment amount (MT) determined from the digital representation (RN), by the output man-machine interface (25).

4. Payment acquisition device (20) according to any of the preceding claims, wherein the memory unit (24) stores payment information for each transaction carried out by the payment acquisition device (20).

5. Method (200) for generating a transaction message for a payment acquisition device (20) for a merchant M, comprising :
- a step (230) for generating a transaction message (MSGT) for a payment server (40), said transaction message (MSGT) encoding data values describing an amount of a payment (MT),
- a step (250) for generating the transmission of said transaction message (MSGT) to said payment server (40) by communication means (27) of the payment acquisition device (20),
the payment amount (MT) being determined by means of the following steps :
- a step, prior to the transaction message generation step (230), of processing (210) and capturing (211) a representation of an invoice (B), by matrix capture means (28) of the payment acquisition device (20),
- a step of generating (212) and storing (213) in a data memory (24) of said payment acquisition device (20), a digital representation (RN) of the invoice (B),
- a step (214) of identifying and determining from the digital representation (RN), and by character recognition to translate part of the digital representation (RN) into a string of alphanumeric characters, the payment amount (MT),
- a step for determining different graphic fields associated respectively with amounts to be accounted for, within the numerical representation (RN), then
- respective steps for decoding, storing and adding the numerical values of the various graphic fields associated respectively with the amounts to be accounted for to obtain the payment amount (MT).

6. Method according to the preceding claim, comprising a step (220) for causing (222) an output, by the output man-machine interface (25) of the payment acquisition device (20), of a content elaborated (221) to translate the payment amount (MT) determined from the digital representation (RN).

7. Method (200) according to any one of claims 5 and 6, for which the step (214) for identifying and/or determining from the digital representation (RN) of an invoice (B), the amount of a payment (MT) consists of an estimation performed by a convolutional neural network of the processing unit (21) of the payment acquisition device (20).

8. A method (200) according to any one of claims 5 to 7, wherein the method (200) is implemented by a processing unit (21) of a payment acquisition device (20) according to any one of claims 1 to 4.

9. A computer program product (P) comprising program instructions, which when written into the program memory (23) of a payment acquisition device (20) according to any one of claims 1 to 4, and interpreted or executed by the processing unit (21) thereof, cause a process according to any one of claims 5 to 8 to be implemented.

10. Payment acquisition device (20) according to any one of claims 1 to 4, for which the program memory (23) comprises the instructions of a computer program product (P) according to claim 9.

11. System comprising a payment acquisition device (20) according to any one of claims 1 to 4 and 10, a payment server (40), an electronic cash register (10) for producing a bill (B) a view of which is capturable by the matrix capture means (28) of said payment acquisition device (20), when said bill (B) is positioned in the capture field (AC) of said matrix capture means (28).

12. A system according to the preceding claim comprising a personal payment issuing device (30) when the payment acquisition device (20) complies with claim 2.
